Europäisches Patentamt

**European Patent Office**

**Office européen des brevets**

(19)

(11) Numéro de publication: **0 171 082**
**A1**

(12)

# DEMANDE DE BREVET EUROPEEN

(21) Numéro de dépôt: **85110002.4**

(22) Date de dépôt: **08.08.85**

(51) Int. Cl.⁴: **F 02 B 37/00**

(30) Priorité: **10.08.84 FR 8412660**

(43) Date de publication de la demande: **12.02.86**
**Bulletin 86/7**

(84) Etats contractants désignés: **CH DE FR GB LI**

(71) Demandeur: **SOCIETE D'ETUDES DE MACHINES THERMIQUES S.E.M.T., 2, Quai de Seine, F-93202 Saint-Denis (FR)**

(72) Inventeur: **Grosshans, Gérald, 6 avenue Saint Honoré d'Eylau, F-75016 Paris (FR)**

(74) Mandataire: **Weinmiller, Jürgen et al, Zeppelinstrasse 63, D-8000 München 80 (DE)**

(54) **Procédé de suralimentation d'un moteur à combustion interne, notamment d'un moteur diesel destiné à la propulsion navale**

(57) La présente invention concerne un procédé de suralimentation d'un moteur à combustion interne, comportant au moins deux turbocompresseurs et dont un au moins est neutralisé lorsque le moteur fonctionne à faible puissance.

Ce procédé est caractérisé en ce que l'on modifie les caractéristiques du ou des turbocompresseurs restant en service en déplaçant vers les débits d'air plus élevés la zone de fonctionnement où le rendement isentropique des compresseurs du ou des turbocompresseurs est optimal.

Application aux moteurs à combustation interne suralimentés destinés à la propulsion navale.

## Procédé de suralimentation d'un moteur à combustion interne, notamment d'un moteur diesel destiné à la propulsion navale

La présente invention concerne un procédé de suralimentation d'un moteur à combustion interne , notamment d'un moteur diesel destiné à la propulsion navale, permettant d'améliorer sont fonctionnement à faible puissance.

Les moteurs à combustion interne diesel suralimentés destinés à fonctionner en régime continu à forte puissance, sont équipés de turbocompresseurs dont l'adaptation est faite pour ce régime de fonctionnement. Dans le cas de la propulsion navale, la puissance du moteur est déterminée par le régime de fonctionnement. En fonction du régime, la pression moyenne effective est assujettie à suivre une courbe de fonctionnement appelée courbe de loi d'hélice. Il en résulte qu'à faible puissance, inférieure à 50% du réglage nominal par exemple, les conditions de débit et de pression d'air de suralimentation sont trop éloignées des conditions optimales de fonctionnement.

On connaît, notamment par le document FR 2 326 581, un moteur à combustion interne dans lequel il est prévu, en deçà d'une certaine limite de puissance, de neutraliser un ou plusieurs turbocompresseurs en affectant aux turbocompresseurs restants la totalité des gaz d'échappement disponibles.

Cette solution appelée suralimentation séquentielle ou fractionnée, permet de retrouver des conditions de débit et de pression d'air sensiblement améliorées mais diminue fortement l'écart entre la pression de l'air de suralimentation et la pression des gaz d'échappement qui peut devenir nul. L'augmentation de débit d'air qui s'ensuit à la sortie des compresseurs restant en service, éloigne leur point de fonctionnement de la zone de pompage mais les place dans des conditions de rendement isentropique mauvaises, celui-ci pouvant être dans certains cas inférieur à 50%.

Cet état de choses n'est relativement pas gênant pour les moteurs à taux de compression élevé dans lesquels l'évacuation des gaz brûlés en fin de course de refoulement des pistons ne nécessite aucune action de balayage par ouverture simultanée des soupapes d'admission et des soupapes d'échappement, en revanche, les moteurs diesel fonctionnant avec de fortes pressions moyennes effectives, donc avec des taux de compression relativement bas destinés à éviter de trop fortes pression maximales de combustion, nécessitent pour évacuer les gaz brûlés en fin de course de refoulement des pistons, une action de balayage provoquée par l'ouverture simultanée des soupapes d'admission et des soupapes d'échappement et par une pression d'air de suralimentation supérieure à la pression des gaz d'échappement. Aux faibles puissances l'égalisation des pressions de suralimentation et d'échappement a donc pour conséquence le refoulement d'une partie des gaz d'échappement dans les conduits d'admission provoquant un encrassement des conduits et des soupapes d'admission préjudiciable au bon fonctionnement du moteur, une augmentation de la température moyenne de la chambre de combustion, une diminution de l'excès d'air effectif avec risque de surchauffe.

Par ailleurs on connaît des dispositifs permettant de faire varier la limite de pompage et la zone de rendement isentropique optimal d'un compresseur qui consistent par exemple à agir sur l'inclinaison des ailettes du diffuseur (document DE 30 44920) ou à mettre en rotation l'air à l'entrée du compresseur. Ces dispositifs sont applicables en particulier aux compresseurs radiaux "monoétages", les plus couramment employés en suralimentation.

Le procédé selon l'invention permet, notamment à un moteur fonctionnant avec de fortes pressions moyennes effectives, de placer les compresseurs dans de bonnes conditions de rendement isentropique tout en évitant les inconvénients de l'art antérieur.

L'invention a pour objet un procédé de suralimentation d'un moteur à combustion interne, comportant au moins deux turbocompresseurs et dont un au moins est neutralisé lorsque le moteur fonctionne à faible puissance, caractérisé en ce que l'on modifie les caractéristiques du ou des turbocompresseurs restant en service en déplaçant vers les débits d'air plus élevés la zone de fonctionnement où le rendement isentropique des compresseurs du ou des turbocompresseurs est optimal.

De préférence, les débits étant appréciés au point de rendement isentropique pour un rapport de pression correspondant au fonctionnement du moteur à la puissance nominale, on déplace la zone de rendement isentropique optimal sur l'échelle des débits d'une valeur au plus proportionnelle au rapport du débit d'air total de tous les compresseurs sur le débit d'air total des compresseurs restant en service.

Avantageusement, le déplacement de la zone de rendement isentropique optimal du compresseur est asservi à la position constatée du point de fonctionnement du compresseur dans le référentiel rapport de pression - débit d'air.

Il est décrit ci-après, à titre d'exemple et en référence aux dessins annexés, un procédé selon l'invention mis en oeuvre dans un moteur à combustion interne comportant deux turbocompresseurs.

La figure 1 représente l'évolution d'un champ compresseur et d'une courbe suivant la loi d'hélice d'un turbocompresseur.

La figure 2 représente l'évolution de la courbe de rendement isentropique optimal d'un compresseur en fonction des caractéristiques aérodynamiques du compresseur et d'un point de fonctionnement donné du moteur.

La figure 3 représente les zones d'utilisation des deux turbocompresseurs ou de l'un d'entre eux seulement.

La figure 4 représente le graphique de l'évolution des pressions d'air de suralimentation et des gaz d'échappement en fonction de la pression moyenne effective représentative de la charge du moteur.

La figure 5 represente le gain en température des gaz d'échappement obtenu.

La figure 6 représente le gain en consommation spécifique obtenu.

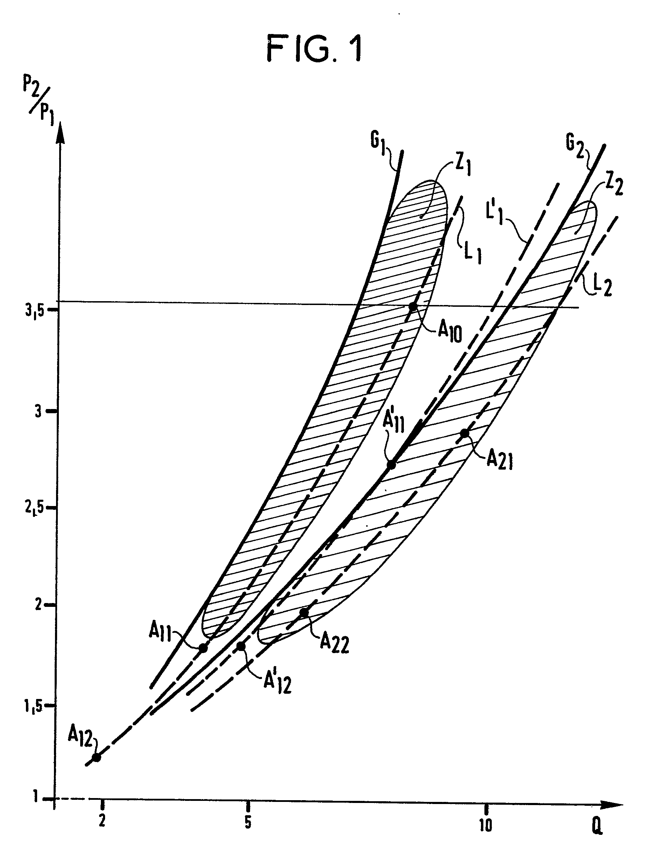

Dans la figure 1 il est représenté, en abscisse, le débit d'air Q (m3/s), et en ordonnée le rapport de la pression d'air P2 à la sortie du compresseur sur la pression d'air P1 à l'entrée du compresseur.

Le point A10 représente sur une courbe suivant la loi d'hélice L1 choisie, le point de fonctionnement nominal d'un turbocompresseur d'une installation à deux turbocompresseurs pour un rapport de pressions par exemple égal à 3,55. Lorsque la vitesse du moteur diminue suivant cette loi d'hélice, le point A10 descend suivant la courbe L1 pour atteindre aux faibles charges des points tels que le point A11 (50%) et le point à A12 (25%). Dans ce cas les rapports de pressions obtenus ne permettent plus une alimentation en air suffisante du moteur.

Les nouvelles conditions imposées à ce turbocompresseur déplacent la courbe suivant la loi hélice L1 en L'1, laquelle courbe suivant la loi d'hélice s'éloigne fortement d'une limite de pompage G1 et d'une zone Z1 de rendement isentropique optimal d'un compresseur. Dans le même temps, l'augmentation du débit de gaz d'échappement fourni au turbocompresseur restant, provoque un accroissement du débit d'air et de la pression, ce qui a pour conséquence de déplacer le point de fonctionnement du compresseur de A11 en A'11 et de A12 en A'12.

Conformément à l'invention on modifie les caractéristiques aérodynamiques du compresseur, ce qui a pour effet de décaler vers les débits d'air plus importants la limite de pompage G1, laquelle sur la figure 1 passe de G1 en G2. La courbe suivant la loi d'hélice passe de L'1 en L2 et les points représentant les charges 50 et 25% passent de A'11 en A21 et de A'12 en A22 dans une zone Z2 de rendement isentropique optimal du compresseur.

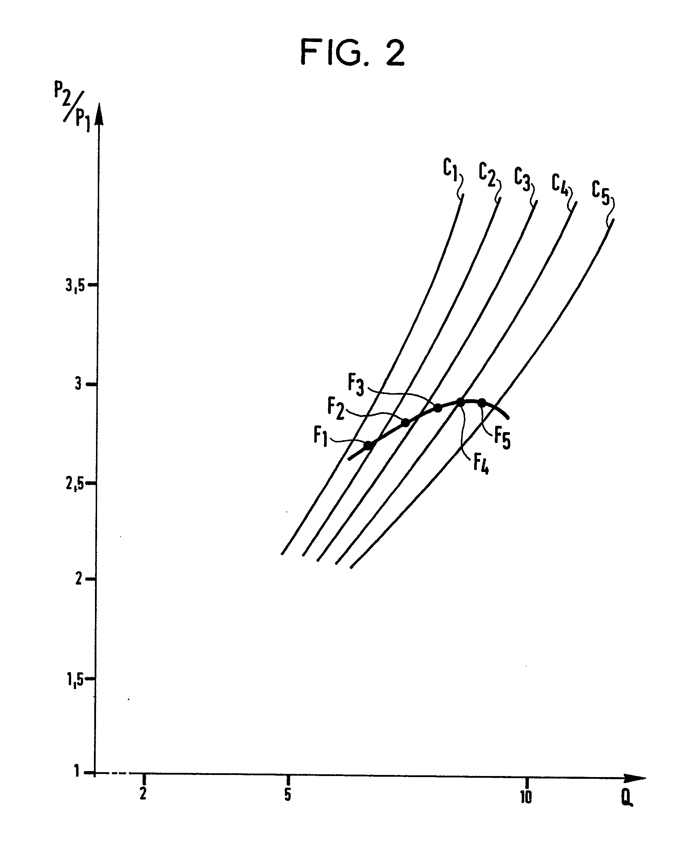

Dans la figure 2, les coordonnées sont les mêmes que celles de la courbe de la figure 1.

Cette figure 2 illustre le principe d'un procédé d'asservissement utilisé pour corriger les caractéristiques aérodynamiques d'un compresseur.

Pour en faciliter la compréhension, nous avons réduit à un ensemble de courbes Ci plusieurs positions succcessives de la zone de rendement isentropique optimal du compresseur en fonction de la modification de ses caractéristiques aérodynamiques.

En l'absence de modification, cette courbe occupe la position C1. Lorsque la modification est maximale, ladite courbe occupe la position C5.

Les positions intermédiaires arbitraires C2, C3 et C4 ont été retenues pour faciliter la compréhension et appartiennent à un domaine de variation continue.

Un point arbitraire Fi de fonctionnement du compresseur est associé à chacune de courbes Ci. La position F1 correspondant à la courbe C1 illustre un point de fonctionnement du compresseur restant en service après neutralisation de l'autre compresseur.

Au cours de la modification des caractéristiques aérodynamiques du compresseur, la courbe de rendement optimal C1 se déplace continument de C1 à C5 en passant notamment par C2, C3 et C4. Dans le même temps, le point F1 se déplace continument de F1 à F5 en passant par F2, F3 et F4.

Le point de fonctionnement optimal est atteint lorsque l'écart entre le point $F_i$ et la courbe $C_i$ correspondante est minimum. Dans l'exemple illustré à la figure 2, la convergence est obtenue pour la courbe C4 et le point de fonctionnement F4.

Les lois d'évolution des courbes $C_i$ et d'un point de fonctionnement $F_i$ quelconque en fonction de la modification des caractéristiques aérodynamiques du compresseur étant connues, il est aisé d'effectuer par un procédé connu en soi, les calculs et les corrections nécessaires, l'asservissement pouvant se faire soit en boucle ouverte, soit en boucle fermée.

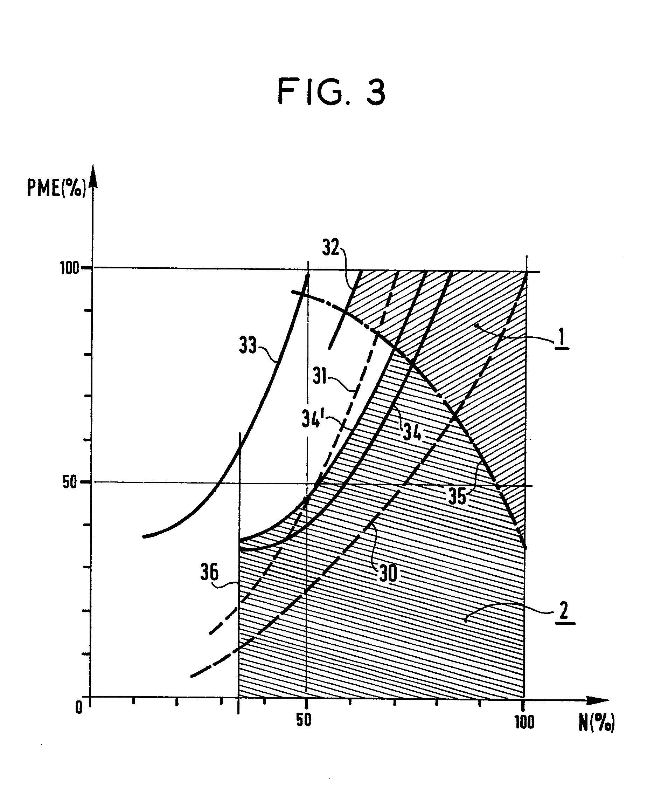

La figure 3 représente des zones de fonctionnement du moteur telle que la zone de fonctionnement 1 dans laquelle il est préférable d'utiliser les deux turbocompresseurs, et telle que la zone de fonctionnement 2 dans laquelle il est préférable d'en utiliser un seul, l'exemple étant donné pour deux turbocompresseurs et une pression moyenne effective nominale de l'ordre de 20 bars. Dans cette figure 3, il est représenté en abscisse le régime du moteur N de 0 à 100% et en ordonnée la pression moyenne effective PME de 0 à 100%.

La courbe 30 représente les points de fonctionnement du moteur suivant la loi d'hélice simple.

La courbe 31 est donnée à titre d'information et celle-ci représente les points de fonctionnement du moteur suivant la loi d'hélice double. Celle-ci correspond au cas ou un seul moteur est conduit à entraîner deux hélices normalement entraînées par deux moteurs identiques, en cas d'avarie par exemple.

La courbe 32 représente la limite de pompage lorsque les deux turbocompresseurs sont en service.

La courbe 33 représente la limite de pompage lorsqu'un seul turbocompresseur dont les caractéristiques ne sont pas modifiées, est en service.

La courbe 34' représente une position quelconque de la limite de pompage obtenue par modification des caractéristiques aérodynamiques du turbocompresseur en service. Le positionnement de cette courbe 34' peut varier continument dans les limites imposées par le mécanisme de modification des caractéristiques aérodynamiques du compresseur, limites représentées par la courbe 33 modification nulle et par la courbe 34 modification maximale.

La courbe 35 représente la limite d'utilisation du turbocompresseur restant en service cette limite étant imposée par la vitesse maximale de rotation de la turbine ou par la pression maximale de combustion.

La ligne verticale 36 représente le régime de ralenti du moteur.

La zone 1 délimitée par la courbe 32, la courbe 35, 100% de pression moyenne effective et 100% de régime moteur, est la zone pour laquelle l'adaptation de l'ensemble des turbocompresseurs est bonne et à l'intérieur de laquelle il est nécessaire d'utiliser les deux turbocompresseurs.

La zone 2 est délimitée par la courbe 35, la courbe 34',0 % de pression moyenne effective, 100% de régime moteur et la courbe 36 de ralenti du moteur. Lorsque un point de fonctionnement du moteur se situe à l'intérieur de la zone 2, un seul turbocompresseur doit être utilisé, la position de la courbe 34' étant une conséquence du positionnement de la zone de rendement isentropique optimal du compresseur par rapport au point de fonctionnement Fi du compresseur suivant le procédé d'asservissement décrit à la figure 2.

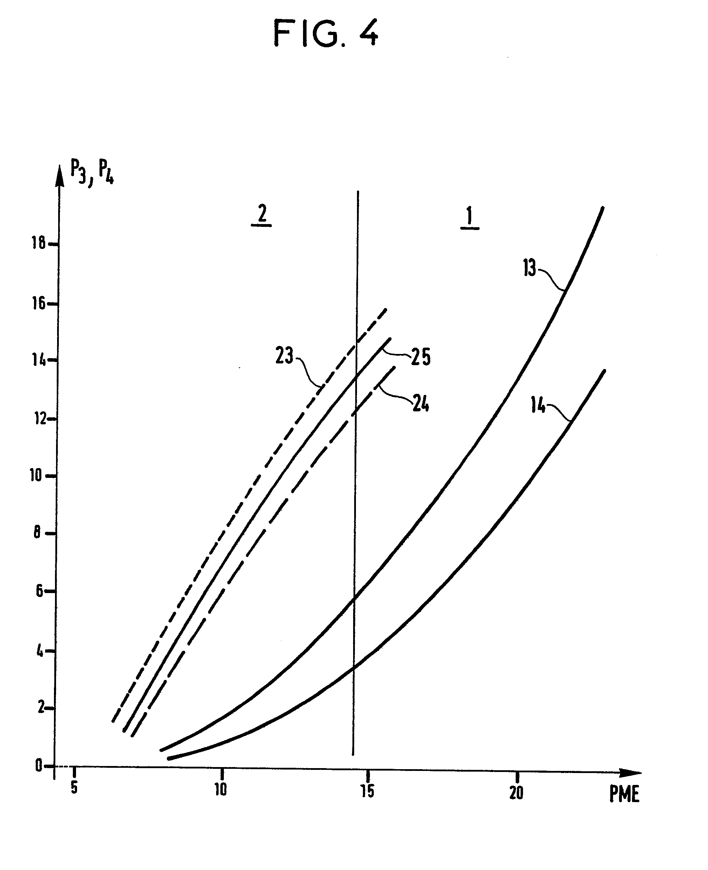

Dans la figure 4, il est représenté en abscisse la pression moyenne effective PME (bars), et en ordonnée la pression de l'air de suralimentation P3 et la pression des gaz d'échappement P4. La zone 1 représente la zone dans laquelle les deux turbocompresseurs sont en service. Dans cette zone 1, la courbe 13 représente la pression de l'air de suralimentation P3 et la courbe 14 représente la pression des gaz d'échappement P4.

La zone 2 représente la zone dans laquelle un turbocompresseur est neutralisé. Dans cette zone 2, la courbe 23 représente la pression de suralimentation P3 et la courbe 24 représente la pression des gaz d'échappement P4. Les pressions d'air de suralimentation P3 et d'échappement P4 tendent à s'égaliser, ou l'écart P3- P4 tend à s'annuler, et l'on obtient par exemple une situation telle que celle définie par la courbe 25 pour laquelle P3 = P4.

Cette situation existe en l'absence de modification des caractéristiques aérodynamiques du compresseur restant en service (courbe C1, figure 2, et limite de pompage G2, figure 3) ce qui situe le point de fonctionnement du compresseur dans les zones de mauvais rendement.

La modification des caractéristiques aérodynamiques du compresseur restant en service, permet de rétablir l'écart de pression souhaitable entre P3 et P4, courbes 23 et 24, en déplaçant la zone de rendement isentropique optimal en direction du point de fonctionnement.

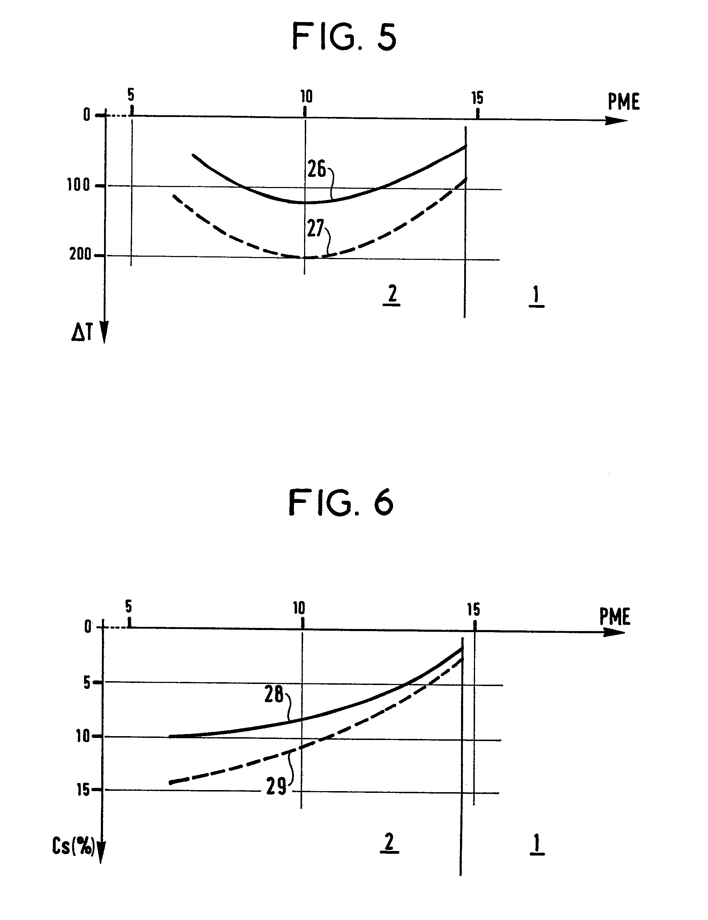

Dans la figure 5, il est représente en abscisse la pression moyenne effective PME (bars), et en ordonnée un gain en température $\Delta T$ (°C).

La zone 1 représente la zone de fonctionnement avec deux turbocompresseurs en service et la zone 2 correspond à un seul turbocompresseur en service, les courbes 26 et 27 montrent respectivement les gains $\Delta T$ en température de gaz d'échappement T4 réalisés avec un turbocompresseur neutralisé sans et avec modification des caractéristiques du turbocompresseur restant en service.

Les essais font apparaître des gains en température importants entre la courbe 26 et la courbe 27 montrant à la fois l'intérêt de fonctionner avec un seul turbocompresseur et l'intérêt de modifier les caractéristiques du turbocompresseur restant en service.

Dans la figure 6, il est représenté en abscisse la pression moyenne effective PME (bars) et en ordonnée un gain en consommation spécifique Cs (%).

La zone 1 représente la zone de fonctionnement avec deux turbocompresseurs en service et la zone 2 correspond à un seul turbocompresseur en service. Les courbes 28 et 29 montrent respectivement les gains en consommation spécifique CS obtenus avec un turbocompresseur neutralisé, sans et avec modification des caractéristiques aérodynamiques du turbocompresseur restant en service.

Comme pour les températures T4 de la figure 5, on note un gain important au niveau de la consommation spécifique.

REVENDICATIONS

1/ Procédé de suralimentation d'un moteur à combustion interne, comportant au moins deux turbocompresseurs et dont un au moins est neutralisé lorsque le moteur fonctionne à faible puissance, caractérisé en ce que l'on modifie les caractéristiques du ou des turbocompresseurs restant en service en déplaçant vers les débits d'air plus élevés la zone de fonctionnement où le rendement isentropique des compresseurs du ou des turbocompresseurs est optimal.

2/ Procédé de suralimentation selon la revendication 1, caractérisé en ce que, les débits étant appréciés au point de rendement isentropique optimal pour un rapport de pression correspondant au fonctionnement du moteur à puissance nominale, on déplace la zone de rendement isentropique optimal sur l'échelle des débits d'une valeur au plus proportionnelle au rapport du débit d'air total de tous les compresseurs sur le débit d'air total des compresseurs restant en service.

3/ Procédé de suralimentation selon au moins l'une des revendications 1 à 2, caractérisé en ce que le déplacement de la zone de rendement isentropique optimal du compresseur est asservi à la position constatée du point de fonctionnement du compresseur dans le référentiel rapport de pression - débit d'air.

4/ Moteur à combustion interne appliquant le procédé selon au moins l'une des revendications 1 à 3.

FIG. 1

FIG. 2

FIG. 3

# FIG. 4

# FIG. 5

# FIG. 6

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| A | DE-A-1 908 258 (L. CARLETTI)<br>* Page 1, ligne 1 - page 2, ligne 25; page 4, lignes 6-29; figure 3 * | 1,4 | F 02 B 37/00 |
| | --- | | |
| A | FR-A-2 452 595 (MOTOREN- UND TURBINEN-UNION FRIEDRICHSHAFEN GmbH)<br>* Page 1, lignes 1-13 * | 1,4 | |
| | ----- | | |

|  |
|---|
| DOMAINES TECHNIQUES RECHERCHES (Int. Cl.4) |
| F 02 B |

Le présent rapport de recherche a été établi pour toutes les revendications

| Lieu de la recherche<br>LA HAYE | Date d'achèvement de la recherche<br>24-09-1985 | Examinateur<br>FRIDEN C.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82